(19) **Europäisches Patentamt**
**European Patent Office**
**Office européen des brevets**

(11) **EP 3 385 721 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(51) Int Cl.:
*G01P 3/36* *(2006.01)* *G01P 3/68* *(2006.01)*
*G01V 8/20* *(2006.01)*

(21) Anmeldenummer: **17165205.0**

(22) Anmeldetag: **06.04.2017**

(54) **LICHTGITTER**

LIGHT GRID

BARRIÈRE LUMINEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.10.2018 Patentblatt 2018/41**

(73) Patentinhaber: **Sick AG**
**79183 Waldkirch (DE)**

(72) Erfinder: **Eble, Johannes**
**79183 Waldkirch (DE)**

(56) Entgegenhaltungen:
**EP-A1- 1 995 610 EP-A1- 2 492 714**
**EP-A1- 2 876 467 DE-A1- 19 515 365**
**US-A1- 2004 149 939**

EP 3 385 721 B1

**Beschreibung**

Die Erfindung betrifft ein Lichtgitter zur Detektion eines durch ein Schutzfeld des Lichtgitters in eine Bewegungsrichtung bewegtes Objekt, wobei das Lichtgitter eine Lichtsendeeinheit umfasst mit mehreren zumeist in Reihe angeordneten Lichtsendern, eine Lichtempfangseinheit umfasst mit mehreren Lichtempfängern und jeder der Lichtempfänger einem der Lichtsender zugeordnet ist (Lichtsender-Lichtempfänger-Paare). Jeder Lichtempfänger stellt von der einfallenden Lichtintensität abhängige Empfangssignale bereit. Diese Empfangssignale werden in einer Auswerteeinheit ausgewertet. Die Lichtstrahlen der Lichtsender-Lichtempfänger-Paare definieren das Schutzfeld des Lichtgitters.

Solche Lichtgitter dienen zur Erkennung von Objekten, wenn das Objekt einen oder mehrere der Lichtstrahlen unterbricht. Mit Identifikation der einzelnen unterbrochenen Lichtstrahlen kann in gewissen Grenzen, also zumindest in einer Dimension eine Ortung oder Vermessung des Objektes im Schutzfeld erfolgen, z.B. eine Objekthöhenbestimmung.

Zur Bestimmung der Geschwindigkeit von sich durch das Schutzfeld bewegenden Objekten ist es z.B. aus der DE 10 2005 030 829 C5 bekannt, die Zeitfolge der nacheinander erfolgenden Strahlunterbrechungen zu erfassen und daraus die Objektgeschwindigkeit abzuleiten. Das geht aber nur, wenn das Objekt in seiner Bewegung auch nacheinander die einzelnen Lichtstrahlen unterbricht. Das funktioniert nicht mehr, wenn das Objekt sich senkrecht zur Ebene des Schutzfeldes bewegt, denn dann ist die Unterbrechung nur abhängig von der Geometrie des Objektes und nicht von der Bewegung.

Für diesen Fall müssen zwei Lichtgitter hintereinander angeordnet sein, deren Lichtstrahlen dann bei Durchfahren des Objektes nacheinander unterbrochen werden. Die US 7,038,764 B2 zeigt eine solche Anordnung, wobei dort sogar die beiden Lichtgitter in einem gemeinsamen Gehäuse angeordnet sind.

EP 2876467 A1 beschreibt ein Lichtgitter, bei dem das Konzept der sogenannten "effektiven" Lichtstrahlen beschrieben ist, die dazu dienen, eine genauere Ortsbestimmung eines Objektes zu ermöglichen.

DE 19515365 A1 beschreibt eine Geschwindigkeitsbestimmung mittels Teilabschattung eines Lichtstrahls.

EP 1995610 A1 beschreibt ein Lichtgitter, bei dem jeder Lichtstrahl mit einem Mehrfachelementempfänger detektiert wird, so dass damit Teilabschattungen eines Lichtstrahls erfasst und daraus Geschwindigkeiten bestimmt werden können.

US 2004149939 A1 beschreibt eine Geschwindigkeitsbestimmung mit Hilfe mehrere Lichtstrahlen, die von einem Fahrzeug nacheinander unterbrochen werden.

EP 2492714 A1 beschreibt ein Sicherheitslichtgitter, bei dem die Unterbrechung von Lichtstrahlen zuverlässig erkannt werden sollen.

Ausgehend von diesem Stand der Technik ist es Aufgabe der Erfindung, ein verbessertes Lichtgitter bereitzustellen, mit dem eine Geschwindigkeitsmessung bei einer Objektbewegung senkrecht zum Schutzfeld möglich ist und ein Abstand zur Lichtquelle bestimmt werden kann.

Diese Aufgabe wird gelöst durch ein Lichtgitter mit den Merkmalen des Anspruchs 1.

Ein erfindungsgemäßes Lichtgitter hat den wesentlichen Vorteil, dass es damit möglich ist, eine Objektgeschwindigkeit senkrecht zur Ebene eines Lichtgitters zu bestimmen. Wesentliche Voraussetzung ist die genaue Kenntnis der sogenannten "effektiven" Lichtstrahlenbündel, also die Messbarkeit von Teilabschattungen und die Kenntnis der Abmessungen der effektiven Strahlabmessungen jedenfalls in Bewegungsrichtung.

Das erfindungsgemäße Lichtgitter zur Detektion eines durch ein Schutzfeld des Lichtgitters in eine Bewegungsrichtung (y-Richtung) bewegten Objekts umfasst:

- eine Lichtsendeeinheit mit mehreren Lichtsendern,
- eine Lichtempfangseinheit mit mehreren Lichtempfängern, wobei jeder der Lichtempfänger einem der Lichtsender zugeordnet ist und ein Lichtempfänger von der einfallenden Lichtintensität abhängige Empfangssignale bereitstellt,
- jedes Paar zugeordneter Lichtsender und Lichtempfänger zwischen sich ein effektives Lichtstrahlenbündel definiert, das dadurch definiert ist, dass an jedem Abstand zur Lichtsendeeinheit eine Teilabschattung dieses effektiven Lichtstrahlenbündels eine der Teilabschattung entsprechende und messbare Intensitätsveränderung in dem zugeordneten Lichtempfänger bewirkt, und die effektiven Lichtstrahlenbündel das Schutzfeld bilden,
- eine Auswerteeinheit zur Auswertung der Empfangssignale,
- wobei in der Auswerteeinheit Schaltlinien definiert sind, wobei eine Schaltlinie innerhalb eines effektiven Lichtstrahlenbündels die Orte (x, y) zwischen einem Lichtsender-Lichtempfänger-Paar angibt, an denen eine Objektkante liegt, wenn die Teilabschattung des effektiven Lichtstrahlenbündels durch das Objekt ein gleiches Empfangssignal erzeugt,
- und wobei pro Lichtsender-Lichtempfänger-Paar zwei erste unterschiedliche Schaltlinien definiert sind,
- und wobei wenigstens zwei weitere, zweite Schaltlinien eines anderen Lichtsender-Lichtempfänger-Paares definiert sind,
- und wobei an jedem Punkt x der Schaltlinien, also zu jedem Abstand von den Lichtsendern, ein Quotient einer Differenz der y-Werte der ersten Schaltlinien und einer Differenz der y-Werte der zweiten Schaltlinien einen anderen Wert hat,

- und wobei die Auswerteeinheit dazu ausgebildet ist, beim Bewegen des Objektes durch das Schutzfeld die vier Zeitpunkte zu bestimmen, an denen die ersten und zweiten Schaltlinien von der Objektkante überschritten werden,
- und wobei die Auswerteeinheit weiter ausgebildet ist, aus diesen vier Zeitpunkten die Geschwindigkeit des Objektes und den Abstand x des Objektes von den Lichtsendern im Schutzfeld zu bestimmen.

Hier erfolgt die Bewegungsgeschwindigkeit letztendlich aufgund einfacher Bestimmung der vier Zeitpunkte, wann die Objektkante die vier Schaltlinien überschreitet. Die genaue Kenntnis der effektiven Lichtstrahlen, in Form der Schaltlinien, ist notwendig. Wurden die Schaltlinien jedoch bestimmt, z.B. bei der Produktion des Lichtgitters, dann kann im laufenden Betrieb schnell und ohne größeren Rechenaufwand die Geschwindigkeitsbestimmung erfolgen. Weiter vorteilhaft ist, dass auch gleichzeitig der Abstand des Objekts von den Lichtsendern bestimmbar ist. Über die Kenntnis, welche der Lichtstrahlen unterbrochen sind und welche nicht, kann damit eine echte Lokalisierung des Objekts im Schutzfeld erfolgen.

Vorteilhafterweise sind die effektiven Lichtstrahlenbündel durch Blenden in einer Lichtsendeoptik geformt, wobei mit besonderem Vorteil eine Blende durch Bedrucken einer Linse gebildet sein kann. Das ist sehr einfach und kostengünstig und lässt fast beliebige Formen von Blendenöffnungen zu, so dass die effektiven Lichtstrahlenbündel in vergleichsweise einfacher Weise "designed" werden können.

Wenn die Blenden Lichtstrahlenbündel formen, deren Querschnitte, also in der y-z Ebene, derart ausgebildet sind, dass die Ausdehnungen der Strahlenbündel in z-Richtung sich in Bewegungsrichtung, also in y-Richtung, stetig monoton verändern, dann kann durch einfaches Beobachten des Intensitätsverlaufes auf einem Lichtempfänger eine Richtungserkennung für die Bewegung des Objektes erfolgen.

Im Folgenden wird die Erfindung anhand von Ausführungsbeispielen unter Bezugnahme auf die Zeichnung im Einzelnen erläutert. In der Zeichnung zeigen:

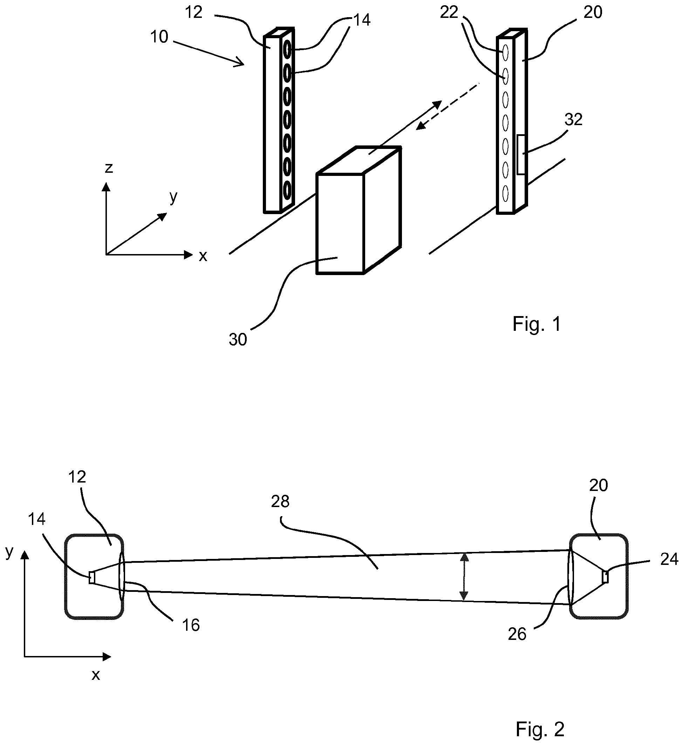

Fig. 1	eine schematische Ansicht eines erfindungsgemäßen Lichtgitters mit Objekt;
Fig. 2	eine schematische Ansicht des Lichtgitters im Querschnitt in der x-y Ebene;
Fig. 3	eine schematische Ansicht wie Fig. 2 zur Darstellung des Konzepts der effektiven Lichtstrahlenbündel;

Fig. 4	ein Diagramm, das die Signalabhängigkeit von der Eindringtiefe eines Objekts in ein Lichtstrahlenbündel zeigen soll;
Fig. 5	zwei Paar Schaltlinien zweier unterschiedlicher effektiver Lichtstrahlenbündel;
Fig. 6	eine schematische Darstellung von zwei unterschiedlichen, effektiven Lichtstrahlenbündeln;
Fig. 7	Beispiele für Blenden;
Fig. 8	eine weitere Blendenform;
Fig. 9	ein Diagramm, das die Abhängigkeit des Signals von der Eindringtiefe eines Objekts zeigt, wenn eine Blende nach Fig. 8 verwendet wird.

Ein erfindungsgemäßes Lichtgitter 10 umfasst eine Lichtsendeeinheit 12 mit mehreren in Reihe angeordneten Lichtsendern 14. Ein Lichtsender 14 kann bedarfsweise auch eine Sendeoptik 16 aufweisen. Weiter umfasst das Lichtgitter 10 eine Lichtempfangseinheit 20 mit mehreren in Reihe angeordneten Lichtempfängern 22, die ebenfalls neben einem Empfangselement 24 eine Empfangsoptik 26 aufweisen können.

Jeder der Lichtempfänger 22 ist einem der Lichtsender 14 zugeordnet, so dass ein solches Paar von Lichtsender 14 und Lichtempfänger 22 ein Lichtstrahlenbündel 28 zwischen sich definiert. Der Lichtempfänger 22 stellt von der einfallenden Lichtintensität abhängige elektrische Empfangssignale bereit.

Folgende Richtungen sollen für die folgende Beschreibung definiert sein. Die Lichtsender 14 strahlen ihr Licht in x-Richtung ab. Die längliche Lichtsendeeinheit 12 erstreckt sich in z-Richtung. Das durch die zwischen Lichtsendern 14 und Lichtempfängern 22 liegende Lichtstrahlen 28 erzeugt Schutzfeld erstreckt sich somit in der z-x Ebene. Senkrecht dazu liegt die y-Richtung, in die ein Objekt 30 durch das Schutzfeld hindurch, beispielsweise durch ein nicht dargestelltes Förderband, bewegt wird.

Die Lichtstrahlenbündel 28 dieser Erfindung sind in spezieller Weise definiert und werden daher im Folgenden "effektive" Lichtstrahlenbündel 28 genannt.

Bei den "effektiven" Lichtstrahlenbündeln 28 handelt es sich um realistischere Strahlenbündel als die theoretischen, idealisierten Strahlenbündel. Im theoretischen Idealfall sind die Lichtsender punktförmige, ideale Lambert'sche Strahler und im Fokus einer idealen Sammellinse angeordnet. Je nach Abstand von idealem Lichtsender und idealer Sammellinse ist das enstehende Strahlenbündel genau parallel oder ideal divergent oder ideal konvergent.

Das ist in der Realität nicht der Fall. Allein schon durch die endliche Ausdehnung der realen Lichtsender 14 ergibt sich nie einer der Idealfälle. Die Erfindung definiert das effektive Lichtstrahlenbündel 28 so, dass an jedem Abstand x zum Lichtsender 14 eine Teilabschattung dieses effektiven Lichtstrahlenbündels 28 durch ein in y-Richtung einfahrendes Objekt 30 eine der Teilabschattung entsprechende und messbare Intensitätsveränderung in dem zugeordneten Lichtempfänger 22 bewirkt.

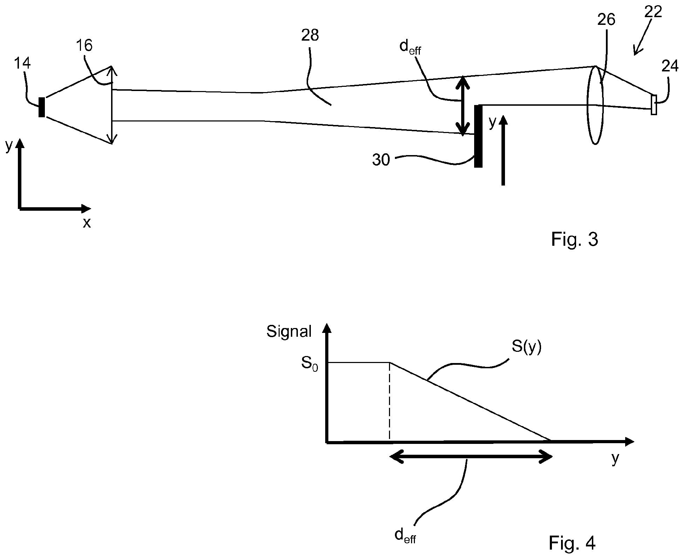

Das soll im Folgenden zum tieferen Verständnis noch detaillierter beschrieben werden. Dabei sollen die Fig. 3 und 4 helfen. In dem erfindungsgemäßen Lichtgitter 10 befindet sich der in y- und z-Richtung ausgedehnte Lichtsender 14 etwa im Fokus der Sendeoptik 16 und strahlt Sendelicht ab. Das Sendelicht hat Anteile von parallelem Licht und auch divergente Anteile. Die Erfindung definiert nun die "effektiven" Lichtstrahlenbündel 28 dadurch, dass eine Teilabschattung des Lichtstrahlenbündels 28 eine entsprechende und messbare Intensitätsveränderung in dem zugeordneten Lichtempfänger 22 bewirkt. Dies ist in Fig. 4 anhand des Diagramms dargestellt. Wird das Objekt 30, das eine Abschattung bewirken kann, in y-Richtung in den Strahlengang eingeschoben, erfolgt eine der Eindringtiefe y entsprechende Teilabschattung und damit Absenkung des Empfangssignals S(y), das bei freiem Strahlengang als $S_0$ definiert wird. Das Signal $S_0$ bei freiem Strahlengang muss für alle Lichtstrahlenbündel 28 und für jeden mechanischen Aufbau, also für jeden Sender-Empfängerabstand, in einem Einlernprozess eingelernt werden. Das Empfangssignal S(y) sinkt bis auf Null, wenn das Objekt 30 das effektive Strahlenbündel 28 vollständig abdeckt. Die Differenz zwischen dem y-Wert bei vollständiger Abschattung und dem y-Wert bei beginnender Abschattung wird als $d_{eff}$ bezeichnet, also Durchmesser des effektiven Lichtstrahlenbündels 28 an der Stelle x. Es sei bemerkt, dass sich ein annähernd linearer Verlauf, wie er in Fig. 4 dargestellt ist, nur dann ergibt, wenn das effektive Lichtstrahlenbündel 28 im Wesentlichen einen rechteckigen Querschnitt hat. Bei Verwendung von kreisförmigen Empfangs- und Sendeoptiken hat das effektive Strahlenbündel 28 einen runden Querschnitt und die Abhängigkeit wäre nicht mehr linear, aber immer noch eindeutig.

In der Realität wird es so sein, dass der y-Wert, bei dem ein bestimmter fester Bruchteil von $S_0$ durch Teilabschattung erreicht wird, von der x-Position, also vom Abstand x zur Lichtsendeeinheit 12, abhängt. Die Wertepaare x-y, die einem solchen festen Bruchteil entsprechen, bilden in der x-y Ebene Linien, die in dieser Erfindung als "Schaltlinien" bezeichnet werden, was weiter unten bei der Beschreibung einer zweiten Variante wichtig wird. In dem theoretischen, idealen Fall eines exakt parallelen effektiven Strahlenbündels sind die Schaltlinien stets Konstante, also der y-Wert ist unabhängig von x. In der Realität sind die Schaltlinien stetige Funktionen, deren Verlauf nur durch Messungen oder Simulation bestimmt werden kann. Der jeweilige Verlauf hängt in erster Linie von der Sendeoptik und der Empfangsoptik ab.

Des Weiteren weist das erfindungsgemäße Lichtgitter 10 eine Auswerteeinheit 32 zur Auswertung der Empfangssignale auf, die in der Regel in der Lichtempfangseinheit 20 angeordnet ist.

Die wesentlichen Elemente der Erfindung sind in dem Gedanken der Teilabschattung der effektiven Lichtstrahlenbündel 28 und in der Ausbildung der Auswerteeinheit 32 zur Auswertung der Teilabschattungen enthalten.

Dazu ist die Auswerteeinheit 32 in einer ersten, nicht erfindungsgemäßen Variante ausgebildet, zu zwei Zeitpunkten $t_1$ und $t_2$ die Empfangssignale $S(t_1)$ und $S(t_2)$ eines der Lichtempfänger 22 aufzunehmen und aus einer Differenz der Empfangssignale $S(t_2)-S(t_1)$, einer Differenz $t_2-t_1$ und der Ausdehnung $d_{eff}$ des dem Lichtempfänger zugeordneten effektiven Lichtstrahlenbündels 28 in Bewegungsrichtung y eine Geschwindigkeit v des Objekts 30 zu bestimmen.

Diese geschieht nach der Formel

$$(1) \qquad v = \frac{|S_2 - S_1| \cdot d_{eff}}{t_2 - t_1}$$

wobei $S_1$ und $S_2$ auf das maximale Empfangssignal $S_0$ ohne Teilabschattung normiert sind.

Für diese Bestimmung der Bewegungsgeschwindigkeit v des Objekts 30 ist eine wesentliche Voraussetzung, dass das effektive Lichtstrahlenbündel 28 genau bekannt, also vermessen ist oder aus einer Simulation bekannt ist. Wenn das Objekt 30 bei seinem Durchfahren durch das Schutzfeld mehrere Lichtstrahlenbündel 28 abschattet, kann die Geschwindigkeit v mit jedem Lichtstrahlenbündel 28 bestimmt werden, wodurch die Genauigkeit der Geschwindigkeitsbestimmung erhöht werden kann.

Prinzipiell können auch mehr als zwei Messungen zu zwei Zeitpunkten erfolgen. Dann würde an die Empfangssignale, welche jeweils durch eine Teilabschattung erzeugt wären, eine Ausgleichslinie angepasst und darüber die Geschwindigkeit ermittelt. Dadurch ließe sich die Genauigkeit erhöhen.

Wenn das effektive Lichtstrahlenbündel über x stetig konvergent oder divergent ist, also $d_{eff}$ eine stetig monotone Abhängigkeit hat und der funktionale Zusammenhang $d_{eff}(x)$ bekannt ist, kann bei bekannter Geschwindigkeit v des Objekts der Abstand x des Objekts zur Lichtsendeeinheit bestimmt werden, nämlich aus Gleichung (1), so dass dann

$$d_{eff} = \frac{(t_2 - t_1) \cdot v}{|S_2 - S_1|}$$

und mit der Kenntnis des funktionalen Zusammenhangs kann aus $d_{eff}$ das gesuchte x bestimmt werden.

In einer zweiten, erfindungsgemäßen Variante ist die Auswerteeinheit 32 etwas anders ausgebildet. Jetzt kommt das Konzept der oben bereits erwähnten Schaltlinien zum Tragen. Wie beschrieben gibt eine Schaltlinie innerhalb eines effektiven Lichtstrahlenbündels 28 die Orte (x, y) an, an denen eine Objektkante 34 liegt, wenn ein bestimmter fester Bruchteil von $S_0$ durch Teilabschattung erreicht wird, also die Teilabschattung des effektiven Lichtstrahlenbündels 28 durch das Objekt 30 stets das gleiche Empfangssignal S erzeugt.

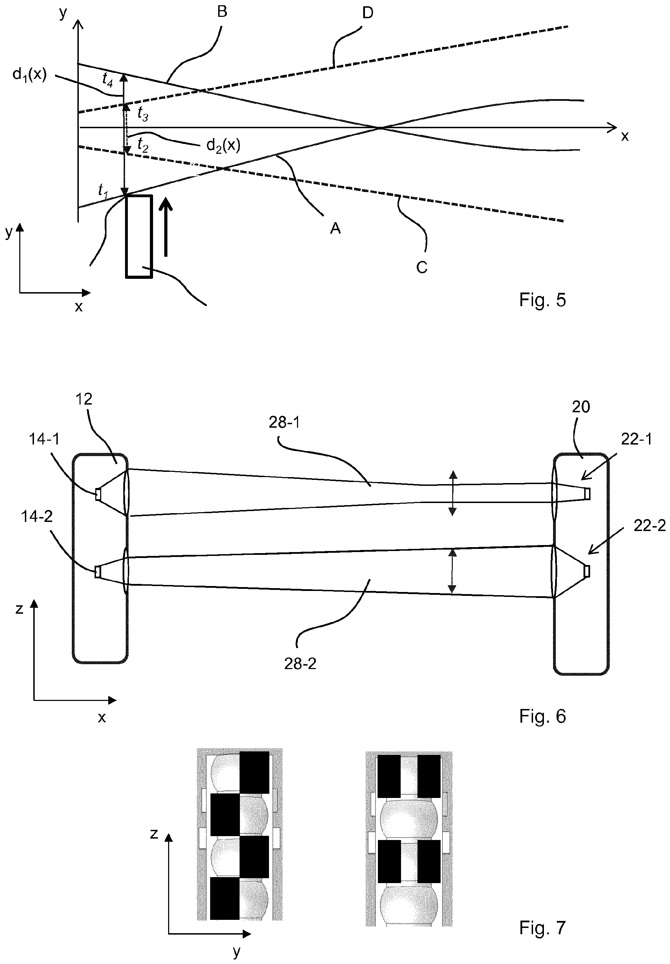

In dieser Variante ist es weiter Voraussetzung, dass das Objekt 30 beim Durchfahren des Schutzfeldes zwei Lichtstrahlenbündel 28-1 und 28-2 unterbricht (Fig. 5 und 6).

Für das erste Lichtstrahlenbündel 28-1 zwischen einem ersten Lichtsender 14-1 und einem ersten Lichtempfänger 22-1 sind zwei unterschiedliche Schaltlinien A und B definiert, die als erste Schaltlinien bezeichnet werden. Darüber hinaus sind zwei weitere, zweite Schaltlinien C und D eines zweiten Lichtstrahlenbündels 28-2 definiert. Die Schaltlinien A, B, C, D müssen durch Messungen oder durch Simulation im Vorhinein bestimmt werden.

Die effektiven Lichtstrahlen 28-1 und 28-2 und damit ihre Schaltlinie A, B, C, D müssen so ausgebildet sein, also so designed sein, dass der Quotient einer Differenz der y-Werte der ersten Schaltlinien A und B, also yB-yA, und einer Differenz der y-Werte der zweiten Schaltlinien C und D, also yD-yC, an jedem Punkt x einen anderen Wert hat. Zum Beispiel kann das dadurch erreicht werden, dass das erste Lichtstrahlenbündel 28-1 konvergent ist und das zweite Lichtstrahlenbündel 28-2 divergent. Andere Verläufe der Lichtstrahlenbündel sind denkbar, z.B. eines divergent und das andere konstant, solange sie zu dazu führen, dass der Quotient sich mit x ändert.

Nun ist die Auswerteinheit 32 so ausgebildet, dass beim Bewegen des Objektes 30 durch das Schutzfeld die vier Zeitpunkte bestimmt werden, an denen die Schaltlinien A, B, C, D von der Objektkante 34 überschritten werden (Fig. 5). Diese Zeitpunkte heißen im Folgenden Schaltzeiten und sollen mit

$t_1$ beim Überschreiten der Schaltlinie A,
$t_4$ beim Überschreiten der Schaltlinie B,
$t_2$ beim Überschreiten der Schaltlinie C,
$t_3$ beim Überschreiten der Schaltlinie D

bezeichnet werden. Dann lässt sich aus diesen vier Zeitpunkten die Geschwindigkeit des Objektes 30 und der Abstand x des Objektes 30 von den Lichtsendern 12-1 und 12-2 im Schutzfeld bestimmen.

Eine Bestimmung kann wie folgt erfolgen:

Das Objekt 30 erreicht beim Einfahren in das Schutzfeld zu den verschiedenen Schaltzeiten die gewählten Schaltlinien A, B, C, D. Hieraus können Schaltzeitdifferenzen berechnet werden:

$$\Delta t_1 = t_4 - t_1 \qquad \Delta t_2 = t_3 - t_2$$

Die ortsabhängigen Abstände der Schaltlinien A und B bzw. C und D (siehe Fig. xx) sollen mit $d_1$ bzw. $d_2$ bezeichnet werden.

Da bei gleichförmiger Geschwindigkeit des Objektes (jedenfalls für die Dauer der Messungen) gilt, dass $\Delta t_1 \sim d_1$ und $\Delta t_2 \sim d_2$ ist und damit

$$(2) \qquad \frac{\Delta t_1}{\Delta t_2} = \frac{d_1}{d_2}$$

$d_1$ und $d_2$ sind von x abhängig, wobei die Abhängigkeit bekannt ist, da die Schaltlinien bekannt sind. Damit gibt es eine bekannte Funktion

$$(3) \qquad d(x) = \frac{d_1(x)}{d_2(x)}$$

Der Zusammenhang $d(x)$ kann beispielsweise in der Auswerteeinheit 32 in einer Look-Up Tabelle oder als Funktion abgelegt sein. Damit ist zu jedem x ein eindeutiges d bekannt bzw. zu jedem $d(x)$ eindeutig ein x.

Mit der Kenntnis von $d_1(x)$ und/oder $d_2(x)$ kann somit der Ort $x_{objekt}$, an dem das Objekt 30 oder besser dessen Vorderkante 34 sich befindet, ermittelt werden.

Die Objektgeschwindigkeit kann berechnet werden mit

$$(4) \qquad v = \frac{d_1(x_{Objekt})}{\Delta t_1}$$

Somit können gleichzeitig die Objektgeschwindigkeit v und der Objektort $x_{Objekt}$ zwischen Sender und Empfänger bestimmt werden.

Wenn die Objektbewegung langsam im Vergleich zur Messfrequenz ist, können die vier Schaltpunkte direkt gemessen werden. Wenn sich das Objekt jedoch relativ schnell bewegt, so dass es passieren kann, dass zwischen zwei Schaltzeitpunkterfassungen das Objekt sich signifikant über die Schaltlinie bewegt, ist es sinnvoller oder besser gesagt genauer, wenn die der Objektbewegung entsprechende Signalabnahme in Abhängigkeit der Zeit auf dem Lichtempfänger erfasst wird. Dann können aus dem ermittelten Signalabnahmeverlauf bzw. aus den Signal/Zeitpunkt-Wertepaaren die Zeiten $t_1$ bis $t_4$ beispielsweise durch Interpolation im Nachhinein für die entsprechenden Schaltlinien ermittelt werden.

Weiter oben wurde angesprochen, dass die Lichtstrahlenbündel 28 und damit ihre Schaltlinien so designed werden müssen, dass verschiedene Bedingungen erfüllt sind, z.B. dass die Lichtstrahlenbündel 28 stetig konvergent oder stetig divergent sind. Eine solche Ausbildung lässt sich abhängig von der Sende- und Empfangsoptik vorteilhafterweise mit Blenden unterschiedlicher Geometrie und Anordnung erzeugen. In den Fig. 7 sind zwei Beispiele möglicher Blenden aufgezeigt, wobei in den Figuren eine Frontansicht der Lichtsendeeinheit 12 mit Ansicht der Sendeoptiken dargestellt ist. Vorteilhafterweise sind die Blenden in einer Lichtsendeoptik geformt, wobei mit besonderem Vorteil eine Blende durch Bedrucken einer Linse gebildet sein kann. Das ist sehr einfach und kostengünstig und lässt fast beliebige Formen von Blendenöffnungen zu, so dass die effektiven Lichtstrahlenbündel in vergleichsweise einfacher Weise "designed" werden können.

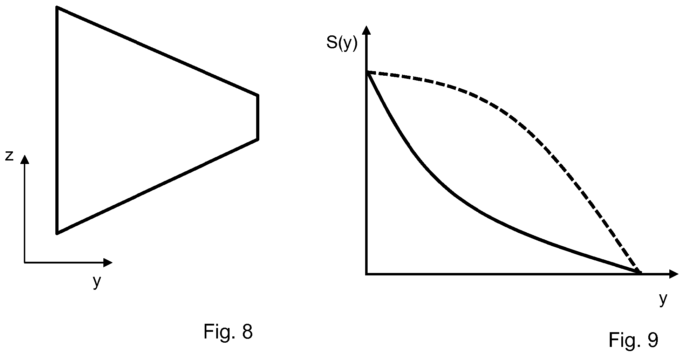

Wenn die Blenden Lichtstrahlenbündel 28 formen, deren Querschnitte, also in der y-z Ebene, derart ausgebildet sind, dass die Ausdehnung der Strahlenbündel in z-Richtung sich in Bewegungsrichtung (Fig. 8), also in y-Richtung, stetig monoton verändert, zum Beispiel trapezförmig wie in Fig. 8 dargestellt, dann kann durch einfaches Beobachten des Intensitätsverlaufes S(y) (Fig. 9) auf einem Lichtempfänger 22 eine Richtungserkennung für die Bewegung des Objektes 30 erfolgen.

Die Erfindung wurde beschrieben bzgl. des Einfahrens einer Vorderkante eines Objekts in das Schutzfeld, d. h. wenn die Vorderkante des Objekts die Strahlenbündel abdeckt. Die Ideen sind nahezu analog übertragbar auf ein ausfahrendes Objekt, d.h. wenn die letzte Objektkante den Lichtweg wieder frei macht.

Die Erfindung kann ebenso Anwendung finden, wenn Sender und Empfänger sich nicht wie beschrieben gegenüberliegen, sondern wenn sie sich auf der gleichen Seite des Schutzfeldes befinden und auf der gegenüberliegenden Seite ein Reflektor.

Die Erfindung kann ebenso Anwendung finden bei der Detektion von teiltransparenten Objekten. Dann muss zusätzlich die Transmission $T_0$ des Objekts bekannt sein oder durch einen unabhängigen Messvorgang, beispielsweise im Lichtgitter, ermittelt werden. Bei zwei Messpunkten kann die Geschwindigkeit mit folgender Formel berechnet werden:

$$(5) \qquad v = \frac{|S_2 - S_1| \cdot d_{eff.Strahl}}{t_2 - t_1} \cdot \frac{1}{(1 - T_0)}$$

Wie bei jeder Messung gibt es auch bei der vorgestellten Geschwindigkeitsmessung Messabweichungen vom richtigen Wert. Da die nacheinander detektierten Objekte häufig dieselbe Geschwindigkeit besitzen, z.B. weil sie auf demselben Förderband gefördert werden, kann aus einer Reihe von Geschwindigkeitsmessungen von Objekten ein genauerer Wert für die Geschwindigkeit ermittelt werden. Zufällige Abweichungen werden eliminiert.

Prinzipiell funktionieren die hier vorgestellten Methoden zur Geschwindigkeitsermittlung mittels Beobachtung von Teilabschattungen auch bei 1-Strahl- oder 2-Strahl-Systemen, denn die Geschwindigkeit wird ja nur an einem Lichtstrahl ermittelt. Also auch in einfachen Lichtschranken mit nur einem Lichtstrahl kann eine Geschwindigkeitsermittlung erfolgen, was jedoch keinen Aspekt der beanspruchten Erfindung darstellt.

**Patentansprüche**

1. Lichtgitter zur Detektion eines durch ein Schutzfeld des Lichtgitters (10) in eine Bewegungsrichtung, nämlich die y-Richtung bewegten Objekts (30) mit

  - einer Lichtsendeeinheit (12), umfassend mehrere Lichtsender (14),
  - einer Lichtempfangseinheit (20), umfassend mehrere Lichtempfänger (22), wobei jeder der Lichtempfänger (22) einem der Lichtsender (14) zugeordnet ist und ein Lichtempfänger (22) von der einfallenden Lichtintensität abhängige Empfangssignale bereitstellt,

- jedes Paar zugeordneter Lichtsender (14-1 bzw. 14-2) und Lichtempfänger (22-1 bzw. 22-2) zwischen sich ein effektives Lichtstrahlenbündel (28-1 bzw. 28-2) definiert, das dadurch definiert ist, dass an jedem Abstand x zur Lichtsendeeinheit (12) eine Teilabschattung dieses effektiven Lichtstrahlenbündels (28-1, 28-2) eine der Teilabschattung entsprechende und messbare Intensitätsveränderung in dem zugeordneten Lichtempfänger (22-1, 22-2) bewirkt, und die effektiven Lichtstrahlenbündel das Schutzfeld in x-z-Ebene bilden,

- einer Auswerteeinheit (32) zur Auswertung der Empfangssignale,

**dadurch gekennzeichnet,**

- **dass** in der Auswerteeinheit (32) Schaltlinien (A, B, C, D) definiert sind, wobei eine Schaltlinie (A; B; C; D) innerhalb eines effektiven Lichtstrahlenbündels die Orte x,y zwischen einem Lichtsender-Lichtempfänger-Paar angibt, an denen eine Objektkante (34) liegt, wenn die Teilabschattung des effektiven Lichtstrahlenbündels (28-1; 28-2) durch das Objekt (30) ein gleiches Empfangssignal erzeugt,

- **dass** pro Lichtsender-Lichtempfänger-Paar zwei erste, unterschiedliche Schaltlinien (A und B) definiert sind,

- **dass** wenigstens zwei weitere, zweite Schaltlinien (C und D) eines anderen Lichtsender-Lichtempfänger-Paares definiert sind,

- **dass** an jedem Punkt x der Schaltlinien, also zu jedem Abstand von der Lichtsendeeinheit (12), ein Quotient einer Differenz der y-Werte der ersten Schaltlinien (A und B) und einer Differenz der y-Werte der zweiten Schaltlinien (C und D) einen anderen Wert hat,

- **dass** die Auswerteeinheit (32) dazu ausgebildet ist, beim Bewegen des Objektes (30) durch das Schutzfeld die vier Zeitpunkte ($t_1$, $t_2$, $t_3$, $t_4$) zu bestimmen, an denen die ersten und zweiten Schaltlinien (A, B, C, D) von der Objektkante (34) überschritten werden,

- und die Auswerteeinheit (32) weiter ausgebildet ist, aus diesen vier Zeitpunkten ($t_1$, $t_2$, $t_3$, $t_4$) die Geschwindigkeit (v) des Objektes (30) und den Abstand x des Objektes (30) von der Lichtsendeeinheit (12) im Schutzfeld zu bestimmen.

2. Lichtgitter nach Anspruch 1, **dadurch gekennzeichnet, dass** die effektiven Lichtstrahlenbündel (28, 28-1, 28-2) durch Blenden in einer Lichtsendeoptik geformt sind.

3. Lichtgitter nach Anspruch 2, **dadurch gekennzeichnet, dass** die Blenden durch Bedrucken einer Linse gebildet sind.

4. Lichtgitter nach einem der vorhergehenden Ansprüche 2 oder 3, **dadurch gekennzeichnet, dass** die Blenden Lichtstrahlenbündel formen, deren Querschnitte (y-z Ebene) derart ausgebildet sind, dass die Ausdehnung in z-Richtung sich in Bewegungsrichtung, d.h. y-Richtung stetig monoton verändert.

5. Lichtgitter nach Anspruch 4, **dadurch gekennzeichnet, dass** der Querschnitt trapezförmig ist.

6. Lichtgitter nach einem der vorhergehenden Ansprüche, **dadurch gekennzeichnet, dass** Lichtsender und Lichtempfänger sich auf einer Seite des Schutzfeldes befinden und auf der gegenüberliegenden Seite ein Reflektor angeordnet ist und die Lichtstrahlen vom Lichtsender über den Reflektor zum Lichtempfänger verlaufen.

**Claims**

1. Light grid for detecting an object (30) moved in a direction of movement, namely the y-direction, through a surveillance area of the light grid (10), having

- a light emitting unit (12) comprising a plurality of light emitters (14),
- a light receiving unit (20) comprising a plurality of light receivers (22), each of the light receivers (22) being associated with one of the light emitters (14) and a light receiver (22) providing reception signals dependent on the incident light intensity,
- each pair of associated light emitters (14-1 and 14-2, respectively) and light receivers (22-1 and 22-2, respectively) defines therebetween an effective light beam (28-1 and 28-2, respectively) which is defined in that at each distance x from the light emitting unit (12) a partial shading of this effective light beam (28-1, 28-2) causes a measurable intensity change in the associated light receiver (22-1, 22-2) corresponding to the partial shading, and the effective light beams form the surveillance area in x-z plane,
- an evaluation unit (32) for evaluating the received signals,

**characterized**

- **in that** switching lines (A, B, C, D) are defined in the evaluation unit (32), a switching line (A; B; C; D) within an effective light beam indicates the locations x, y between a light-emitter/light-receiver pair at which an object edge (34) lies when the partial shading of the effective light beam (28-1; 28-2) by the object (30) generates a corresponding received signal,

- **in that** two first, different switching lines (A and B) are defined for each light-emitter/light-receiver pair,

- **in that** at least two further, second switching lines (C and D) of another light-emitter/light-receiver pair are defined,

- **in that** at each point x of the switching lines, i.e. at each distance from the light emitting unit (12), a quotient of a difference between the y values of the first switching lines (A and B) and a difference between the y values of the second switching lines (C and D) has a different value,

- **in that** the evaluation unit (32) is designed such that, when the object (30) is moved through the surveillance area, to determine the four points in time (t1, t2, t3, t4) at which the first and second switching lines (A, B, C, D) are crossed by the object edge (34),

- and the evaluation unit (32) is further designed to determine from these four points in time (t1, t2, t3, t4) the velocity (v) of the object (30) and the distance x of the object (30) from the light emitting unit (12) in the surveillance area.

2. Light grid according to claim 1, **characterized in that** the effective light beams (28, 28-1, 28-2) are formed by apertures in a light emitting optical system.

3. Light grid according to claim 2, **characterized in that** the apertures are formed by printing a lens.

4. Light grid according to one of the preceding claims 2 or 3, **characterized in that** the apertures form light beams whose cross-sections (y-z plane) are formed in such a way that the expansion in the z-direction changes continuously monotonously in the direction of movement, i.e. y-direction.

5. Light grid according to claim 4, **characterized in that** the cross-section is trapezoidal.

6. Light grid according to one of the preceding claims, **characterized in that** light emitter and light receiver are located on one side of the surveillance area and a reflector is arranged on the opposite side and the light beams run from the light emitter via the reflector to the light receiver.

**Revendications**

1. Barrière lumineuse pour détecter un objet (30) déplacé dans une direction de déplacement, à savoir la direction y, à travers une zone de surveillance de la barrière lumineuse (10), comprenant

- une unité émettrice de lumière (12) comprenant une pluralité d'émetteurs de lumière (14),

- une unité de réception de lumière (20) comprenant une pluralité de récepteurs de lumière (22), chacun des récepteurs de lumière (22) étant associé à l'un des émetteurs de lumière (14) et un récepteur de lumière (22) fournissant des signaux de réception dépendant de l'intensité lumineuse incidente,

- chaque paire d'émetteurs de lumière associés (14-1 et 14-2, respectivement) et de récepteurs de lumière (22-1 et 22-2, respectivement) définit entre eux un faisceau lumineux effectif (28-1 et 28-2, respectivement) qui est défini en ce qu'à chaque distance x de l'unité de transmission de lumière (12) une ombre partielle de ce faisceau lumineux effectif (28-1, 28-2) provoque une variation mesurable de l'intensité du récepteur lumineux associé (22-1, 22-2) correspondant à l'ombre partielle, et les faisceaux lumineux effectifs forment la zone de surveillance dans le plan x-z,

- une unité d'évaluation (32) pour évaluer les signaux reçus,

caractérié en ce que

- des lignes de commutation (A, B, C, D) sont définies dans l'unité d'évaluation (32), et une ligne de commutation (A; B; C; D) dans un faisceau lumineux effectif indique les emplacements x, y entre une paire émetteur/récepteur de lumière à laquelle se trouve un bord objet (34) lorsque l'ombre partielle du faisceau lumineux effectif (28-1; 28-2) par l'objet (30) génère un signal reçu correspondant,

- deux premières lignes de commutation différentes (A et B) sont définies pour chaque paire lumière-émetteur/récepteur de lumière,

- au moins deux autres deuxièmes lignes de commutation (C et D) d'une autre paire lumière-émetteur/récepteur sont définies,

- à chaque point x des lignes de commutation, c'est-à-dire à chaque distance de l'unité émettrice de lumière (12), un quotient d'une différence entre les valeurs y des premières lignes de commutation (A et B) et une différence entre les valeurs y des secondes lignes de commutation (C et D) a une valeur différente,
- l'unité d'évaluation (32) est conçue de telle sorte que, lorsque l'objet (30) est déplacé dans la zone de surveillance, pour déterminer les quatre points dans le temps (t1, t2, t3, t4) auxquels les premières et secondes lignes de commutation (A, B, C, D) sont traversées par le bord de l'objet (34),
- et l'unité d'évaluation (32) est en outre conçue pour déterminer à partir de ces quatre points dans le temps (t1, t2, t3, t4) la vitesse (v) de l'objet (30) et la distance x de l'objet (30) à l'unité émettrice de lumière (12) dans la zone de surveillance.

2. Barrière lumineuse selon la revendication 1, **caractérisée en ce que** les faisceaux lumineux effectifs (28, 28-1, 28-2) sont formés par des ouvertures dans un système optique émetteur de lumière.

3. Barrière lumineuse selon la revendication 2, **caractérisée en ce que** les ouvertures sont formées par l'impression d'une lentille.

4. Barrière lumineuse selon l'une des revendications précédentes 2 ou 3, **caractérisée en ce que** les ouvertures forment des faisceaux lumineux dont les sections transversales (plan y-z) sont formées de telle sorte que la dilatation dans la direction z change continuellement et de façon monotone dans la direction du mouvement, c'est-à-dire dans la direction y.

5. Barrière lumineuse selon la revendication 4, **caractérisée en ce que** la section transversale est trapézoïdale.

6. Barrière lumineuse selon l'une des revendications précédentes, **caractérisée en ce que** l'émetteur de lumière et le récepteur de lumière sont situés d'un côté de la zone de surveillance et un réflecteur est disposé du côté opposé et les rayons lumineux vont de l'émetteur de lumière au récepteur de lumière en passant par le réflecteur.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005030829 C5
- US 7038764 B2
- EP 2876467 A1
- DE 19515365 A1
- EP 1995610 A1
- US 2004149939 A1
- EP 2492714 A1